# EUROPEAN PATENT SPECIFICATION

(11) **EP 1 886 004 B1**
(45) Date of publication and mention of the grant of the patent: **22.10.2008**
(21) Application number: 06747144.1
(22) Date of filing: 29.05.2006
(51) Int. Cl.: F01L 9/04, F16K 31/06

(54) **ELECTROMAGNETICALLY DRIVEN VALVE**
ELEKTROMAGNETISCH ANGESTEUERTES VENTIL
VANNE A COMMANDE ELECTROMAGNETIQUE

(30) Priority: 01.06.2005 JP 2005161609
(43) Date of publication of application: 13.02.2008
(73) Proprietor: TOYOTA JIDOSHA KABUSHIKI KAISHA, Toyota-shi Aichi 4718571 (JP)
(72) Inventor: NAKAMURA, Kiyoharu, Toyota-shi, Aichi 4718571 (JP)
(74) Representative: Kopp, Stephan
(86) International application number: PCT/JP2006/311164
(87) International publication number: WO 2006/129831

(56) References cited:
- WO-A-97/17561
- DE-A1- 10 018 114
- US-A1- 2004 149 944
- US-A1- 2005 076 865
- PATENT ABSTRACTS OF JAPAN vol. 017, no. 465 (M-1468), 25 August 1993 (1993-08-25) & JP 05 106414 A (ISUZU MOTORS LTD), 27 April 1993 (1993-04-27) cited in the application

## Description

### Technical Field

The present invention generally relates to an electromagnetically driven valve, and more particularly to an electromagnetically driven valve including an electromagnet implemented by a monocoil.

### Background Art

With regard to a conventional electromagnetically driven valve, for example, Japanese Patent Laying-Open No. 5-106414 discloses an electromagnetically driven valve aiming to increase initial drive force of the valve (Patent Document 1). The electromagnetically driven valve disclosed in Patent Document 1 includes a moving coil provided in a moving portion and an electromagnetic coil wound around an electromagnetic core. At the time of initial drive, thrust of the valve is generated by feeding a current to the moving coil, and a line of magnetic force enhancing the thrust is applied to the magnetic coil by feeding a current to the electromagnetic coil.

An electromagnetically driven valve called a rotary drive type includes first and second moving elements carrying out oscillating movement between an valve-opening position and a valve-closing position around rotatably supported support portions respectively and an electromagnet arranged between the first moving element and the second moving element. Before the electromagnetically driven valve starts moving, the first and second moving elements are located at a position intermediate between the valve-opening position and the valve-closing position, and initial drive of the electromagnetically driven valve is triggered by applying the electromagnetic force generated by the electromagnet to the first and second moving elements.

If the electromagnet is implemented by a monocoil (continuous coil) and if the current is supplied to the monocoil, electromagnetic force of equal magnitude is applied to the first moving element and the second moving element. In such a case, the first and second moving elements stay at the intermediate position, and initial drive of the electromagnetically driven valve is not successfully carried out. Meanwhile, though the electromagnetic coil is provided in the electromagnetically driven valve in order to increase initial drive force according to Patent Document 1 above, the structure may be complicated or a size may be great.

### Disclosure of the Invention

The present invention was made to solve the above-described problems, and an object of the present invention is to provide an electromagnetically driven valve having a simplified structure, of which initial drive is facilitated.

An electromagnetically driven valve according to one aspect of the present invention includes: first and second moving elements having rotatably supported support portions and carrying out oscillating movement between a valve-opening position and a valve-closing position around the support portions respectively; and an electromagnet having a monocoil and arranged between the first moving element and the second moving element. The first and second moving elements are held at a position intermediate between the valve-opening position and the valve-closing position while electromagnetic force is not applied. As a result of current supply to the monocoil, the electromagnetic force in a direction toward the valve-opening position and the valve-closing position acts on the first and second moving elements. Magnetic permeability of a material forming the first moving element is different from that of a material forming the second moving element.

It is noted that the monocoil refers to a continuous coil (the monocoil is to be understood similarly hereinafter). When a current is supplied to the monocoil, the electromagnetic force in a direction toward the valve-opening position and the valve-closing position simultaneously acts on the first and second moving elements. The position intermediate between the valve-opening position and the valve-closing position refers to a position in the middle between the valve-opening position and valve-closing position where a distance from the valve-opening position is equal to a distance from the valve-closing position (the intermediate position is to be understood similarly hereinafter). At the intermediate position, a gap between the first moving element and the electromagnet is equal in width to a gap between the second moving element and the electromagnet.

According to the electromagnetically driven valve structured as above, flow of magnetic flux is easier in one of the first and second moving elements, while flow of magnetic flux is harder in the other of the first and second moving elements. Accordingly, as a result of current supply to the monocoil, relatively large electromagnetic force is applied to the moving element through which flow of magnetic flux is easier, while relatively small electromagnetic force is applied to the moving element through which flow of magnetic flux is harder. Consequently, the first and second moving elements start to oscillate from the intermediate position at which they have been held before start of movement toward any one of the valve-opening position side and the valve-closing position side. Therefore, according to the present invention, initial drive of the electromagnetically driven valve can be facilitated with a simplified structure.

The electromagnet further has first and second core portions around which the monocoil is wound such that magnetic fluxes pass between the first and second core portions and the first and second moving elements respectively. Preferably, if magnetic permeability of the material forming the first moving element is greater than magnetic permeability of the material forming the second moving element, magnetic permeability of a material forming the first core portion is greater than magnetic permeability of a material forming the second core portion. On the other hand, if magnetic permeability of the material forming the first moving element is smaller than magnetic permeability of the material forming the second moving element, magnetic permeability of the material forming the first core portion is smaller than magnetic permeability of the material forming the second core portion.

According to the electromagnetically driven valve structured as above, the electromagnetic force applied to the first moving element is generated as a result of flow of magnetic flux on the magnetic circuit formed between the first moving element and the first core portion, and the electromagnetic force applied to the second moving element is generated as a result of flow of magnetic flux on the magnetic circuit formed between the second moving element and the second core portion. Accordingly, magnetic permeability of the material forming the first core portion differs from magnetic permeability of the material forming the second core portion in accordance with magnitude of magnetic permeability of the material forming the first and second moving elements, so that difference between the electromagnetic force applied to the first moving element and the electromagnetic force applied to the second moving element can further be ensured.

The electromagnetically driven valve is mounted on an internal combustion engine and used to control communication between a combustion chamber and an exhaust port. The electromagnetically driven valve further includes a driven valve coupled to the first and second moving elements and moving from a position where it cuts off communication between the combustion chamber and the exhaust port into the combustion chamber, along with movement of the first and second moving elements from the valve-closing position to the valve-opening position. Preferably, the magnetic permeability of the material forming the first moving element is greater than the magnetic permeability of the material forming the second moving element.

According to the electromagnetically driven valve structured as above, when the driven valve moves from the valve-closing position to the valve-opening position (hereinafter, also simply referred to as "when the valve opens"), an in-cylinder pressure in the combustion chamber caused by an expansion stroke of the internal combustion engine is applied to the driven valve. Here, according to the present invention, even after the electromagnetically driven valve starts moving, the electromagnetic force in a direction toward the valve-opening position applied to the first moving element is greater than the electromagnetic force in a direction toward the valve-closing position applied to the second moving element. Therefore, sufficiently large electromagnetic force can be obtained when the valve opens, and the driven valve can move more smoothly.

An electromagnetically driven valve according to another aspect of the present invention includes: first and second moving elements having rotatably supported support portions and carrying out oscillating movement between a valve-opening position and a valve-closing position around the support portions respectively; and an electromagnet having a monocoil and arranged between the first moving element and the second moving element. The first and second moving elements are held at a position intermediate between the valve-opening position and the valve-closing position while electromagnetic force is not applied. As a result of current supply to the monocoil, magnetic flux flows through the first and second moving elements, and the electromagnetic force in a direction toward the valve-opening position and the valve-closing position acts on the first and second moving elements. The first moving element is different in shape from the second moving element, on a magnetic circuit through which the magnetic flux passes.

According to the electromagnetically driven valve structured as above, the first and second moving elements are shaped differently on the magnetic circuit serving as a passage of the magnetic flux, so that magnitude of magnetic flux that flows through the moving element can be different. Here, as a result of current supply to the monocoil, relatively large electromagnetic force is applied to the moving element through which large magnetic flux flows, while relatively small electromagnetic force is applied to the moving element through which small magnetic flux flows. Consequently, the first and second moving elements start to oscillate from the intermediate position at which they have been held before start of movement toward any one of the valve-opening position side and the valve-closing position side. Therefore, according to the present invention, initial drive of the electromagnetically driven valve can be facilitated with a simplified structure.

Preferably, when the first and second moving elements are cut in a plane orthogonal to a direction in which the magnetic flux flows, a minimum cross-sectional area of the first moving element on the magnetic circuit through which the magnetic flux flows is different from a minimum cross-sectional area of the second moving element on the magnetic circuit through which the magnetic flux flows. According to the electromagnetically driven valve structured as above, relatively large magnetic flux flows through the moving element having a larger minimum cross-sectional area, while relatively small magnetic flux flows through the moving element having a smaller minimum cross-sectional area.

The first and second moving elements further have first and second surfaces each extending on a single surface, facing respective opposing surfaces of the electromagnet and receiving the electromagnetic force, respectively. Preferably, an area of the first surface is different from an area of the second surface. According to the electromagnetically driven valve structured as above, not only difference in magnitude of the magnetic flux that flows but also difference in the area of the surface of the moving element to which the electromagnetic force is applied contributes to difference between the electromagnetic force applied to the first moving element and the electromagnetic force applied to the second moving element.

Preferably, the electromagnet further has first and second attraction and contact surfaces each extending on a single surface, facing the first and second surfaces and attracting the first and second moving elements respectively. When the area of the first surface is greater than the area of the second surface, an area of the first attraction and contact surface is greater than an area of the second attraction and contact surface. When the area of the first surface is smaller than the area of the second surface, the area of the first attraction and contact surface is smaller than the area of the second attraction and contact surface. According to the electromagnetically driven valve structured as above, difference in the area of the attraction and contact surface of the electromagnet applying electromagnetic force to the moving element contributes to the difference between the electromagnetic force applied to the first moving element and the electromagnetic force applied to the second moving element.

The electromagnetically driven valve is mounted on an internal combustion engine and used to control communication between a combustion chamber and an exhaust port. The electromagnetically driven valve further includes a driven valve coupled to the first and second moving elements and moving from a position where it cuts off communication between the combustion chamber and the exhaust port into the combustion chamber, along with movement of the first and second moving elements from the valve-closing position to the valve-opening position. Preferably, when the first and second moving elements are cut in a plane orthogonal to a direction in which the magnetic flux flows, a minimum cross-sectional area of the first moving element on the magnetic circuit through which the magnetic flux flows is greater than a minimum cross-sectional area of the second moving element on the magnetic circuit through which the magnetic flux flows. According to the electromagnetically driven valve structured as above, sufficiently large electromagnetic force can be obtained when the valve opens, and the driven valve can move more smoothly.

An electromagnetically driven valve according to yet another aspect of the present invention includes a moving element having a rotatably supported support portion and carrying out oscillating movement between a valve-opening position and a valve-closing position around the support portion, and an electromagnet having a monocoil and applying electromagnetic force to the moving element. While the electromagnetic force is not applied, the moving element is held at a position intermediate between the valve-opening position and the valve-closing position. As a result of current supply to the monocoil, the electromagnetic force in a direction toward the valve-opening position and the valve-closing position acts on the moving element. The electromagnetically driven valve further includes an actuator applying force in a direction to move the moving element to any one of the valve-opening position and the valve-closing position to the moving element held at the intermediate position.

According to the electromagnetically driven valve structured as above, the force applied to the moving element by the actuator can contribute to the difference between the electromagnetic force in the direction toward the valve-opening position applied to the moving element and the electromagnetic force in the direction toward the valve-closing position, based on the force applied from the actuator to the moving element. Consequently, the moving element starts to oscillate from the intermediate position at which it has been held before start of movement toward any one of the valve-opening position side and the valve-closing position side. Therefore, according to the present invention, initial drive of the electromagnetically driven valve can be facilitated with a simplified structure.

The electromagnetically driven valve is mounted on an internal combustion engine. Preferably, the actuator is driven by power generated when the internal combustion engine is driven. According to the electromagnetically driven valve structured as above, the internal combustion engine is used to drive the actuator, so that the electromagnetically driven valve can have a simplified structure.

As described above, according to the present invention, an electromagnetically driven valve with a simplified structure, of which initial drive is facilitated, can be provided. '

### Brief Description of the Drawings

Fig. 1 is a cross-sectional view of an electromagnetically driven valve according to a first embodiment of the present invention.
Fig. 2 is a perspective view of a valve-opening side core portion constituting an electromagnet in Fig. 1.
Fig. 3 is a cross-sectional view of the electromagnetically driven valve in Fig. 1, driven from a valve-closing position to a valve-opening position.
Fig. 4 is a cross-sectional view of an electromagnetically driven valve according to a second embodiment of the present invention.
Fig. 5 is a perspective view of a core portion of an electromagnet employed in a variation of the electromagnetically driven valve in Fig. 4.
Fig. 6 is a perspective view of a valve-closing side moving element of an electromagnetically driven valve according to a third embodiment of the present invention.
Fig. 7 is a perspective view of a first variation of the valve-closing side moving element in Fig. 6.
Fig. 8 is a perspective view of a second variation of the valve-closing side moving element in Fig. 6.
Fig. 9 is a cross-sectional view of an electromagnetically driven valve according to a fourth embodiment of the present invention.
Fig. 10 is a cross-sectional view of an electromagnetically driven valve according to a fifth embodiment of the present invention.
Fig. 11 is a cross-sectional view of a variation of the electromagnetically driven valve in Fig. 10.

### Best Modes for Carrying Out the Invention

An embodiment of the present invention will be described with reference to the drawings. It is noted that the same or corresponding elements have the same reference characters allotted in the drawings.

### (First Embodiment)

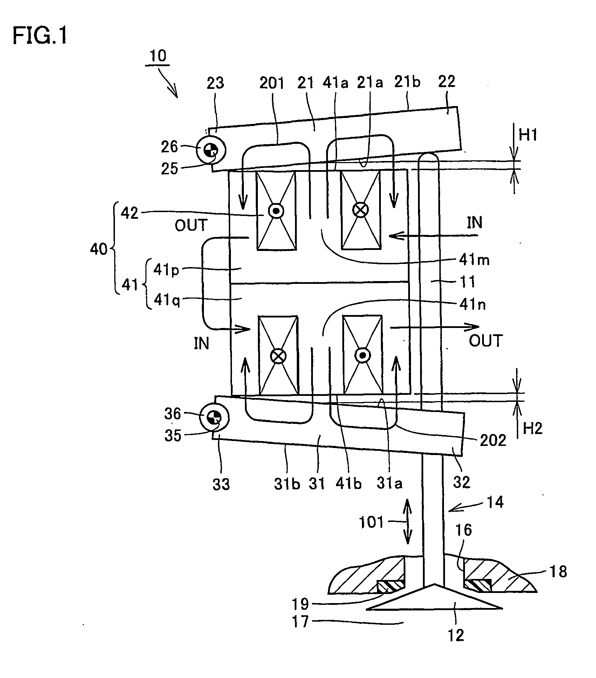

Fig. 1 shows an electromagnetically driven valve according to the first embodiment of the present invention. The electromagnetically driven valve according to the present embodiment implements an exhaust valve in an internal combustion engine such as a gasoline engine or a diesel engine. It is noted that the electromagnetically driven valve may implement an intake valve of an internal combustion engine, in which case the electromagnetically driven valve is also structured as described hereinafter.

Referring to Fig. 1, an electromagnetically driven valve 10 is a rotary drive type electromagnetically driven valve, which is driven as a result of cooperation of electromagnetic force and elastic force. As an operation mechanism for the electromagnetically driven valve, a parallel link mechanism is adopted.

Electromagnetically driven valve 10 includes a driven valve 14, a valve-opening side moving element 21 and a valve-closing side moving element 31 oscillating by receiving electromagnetic force and elastic force applied thereto and provided at a distance from each other, an electromagnet 40 arranged between valve-opening side moving element 21 and valve-closing side moving element 31 and generating the electromagnetic force to be applied to these moving elements, and torsion bars 26 and 36 provided in valve-opening side moving element 21 and valve-closing side moving element 31 respectively and applying elastic force to these moving elements.

Driven valve 14 is constituted of a stem 11 extending in one direction and an umbrella-shaped portion 12 formed at an end of stem 11. A not-shown valve guide is provided around stem 11. The valve guide guides stem 11 in a direction in which stem 11 extends, in such a manner that stem 11 is slidable. Driven valve 14 carries out reciprocating motion in a direction shown with an arrow 101 in which stem 11 extends, upon receiving the oscillating movement of valve-opening side moving element 21 and valve-closing side moving element 31.

Driven valve 14 is mounted on a cylinder head 18 in which an exhaust port 16 is formed. A valve seat 19 is provided in a position where exhaust port 16 of cylinder head 18 communicates to a combustion chamber 17. The reciprocating motion of driven valve 14 causes umbrella-shaped portion 12 to intimately contact with valve seat 19 or to move away from valve seat 19, so as to open or close exhaust port 16.

Valve-opening side moving element 21 is formed from a magnetic material. Valve-opening side moving element 21 has a support portion 23 and a coupled portion 22, and extends from support portion 23 toward coupled portion 22. Opposing surfaces 21a and 21b are formed between support portion 23 and coupled portion 22. A central axis 25 serving as an oscillation center of valve-opening side moving element 21 is defined in support portion 23. Torsion bar 26 extending along central axis 25 is connected to support portion 23. Support portion 23 is rotatably supported by a not-shown disc support base through torsion bar 26. In coupled portion 22, the tip end of stem 11 opposite to the end where umbrella-shaped portion 12 is formed abuts on surface 21 a.

Valve-closing side moving element 31 is formed from a magnetic material, and has a support portion 33, a coupled portion 32 and surfaces 31a and 31b, corresponding to support portion 23, coupled portion 22 and surfaces 21a and 21b of valve-opening side moving element 21 respectively. Surface 21a is opposed to surface 31a at a distance from each other. Coupled portion 32 is rotatably coupled to a midpoint of stem 11 by means of a cam follower or the like. A central axis 35 serving as an oscillation center of valve-closing side moving element 31 is defined in support portion 33. Torsion bar 36 extending along central axis 35 is connected to support portion 33.

Magnetic permeability of the magnetic material forming valve-opening side moving element 21 is greater than magnetic permeability of the magnetic material forming valve-closing side moving element 31. Generally, the magnetic material is subjected to heat treatment for sufficiently growing a metal texture and improving magnetic characteristics (magnetic annealing). In the present embodiment, heat treatment for valve-closing side moving element 31 is not performed, so that the magnetic permeability of valve-opening side moving element 21 differs from the magnetic permeability of valve-closing side moving element 31. Here, as the heat treatment for valve-closing side moving element 31 is not performed, manufacturing cost is reduced. In order to set different magnetic permeability, valve-opening side moving element 21 and valve-closing side moving element 31 may be formed from magnetic materials having compositions different from each other.

Torsion bar 26 applies elastic force to valve-opening side moving element 21, in a manner moving the same clockwise around central axis 25. Torsion bar 36 applies elastic force to valve-closing side moving element 31, in a manner moving the same counterclockwise around central axis 35. While the electromagnetic force from electromagnet 40 is not yet applied, valve-opening side moving element 21 and valve-closing side moving element 31 are positioned by elastic force of torsion bars 26 and 36 at a position intermediate between the valve-opening position and the valve-closing position.

Electromagnet 40 is provided between valve-opening side moving element 21 and valve-closing side moving element 31, in a manner fixed to a not-shown disc support base. Electromagnet 40 is constituted of a coil 42 implemented by a monocoil and a core portion 41 around which coil 42 is wound. Core portion 41 is constituted of a valve-opening side core portion 41p facing valve-opening side moving element 21 and a valve-closing side core portion 41q facing valve-closing side moving element 31.

Valve-opening side core portion 41p and valve-closing side core portion 41q have shaft portions 41m and 41n extending in parallel to stem 11, respectively. Coil 42 is first wound around shaft portion 41m and around shaft portion 41n. It is noted that a method of winding coil 42 is not limited as such.

Valve-opening side core portion 41p has an attraction and contact surface 41a facing surface 21 a of valve-opening side moving element 21, while valve-closing side core portion 41q has an attraction and contact surface 41b facing surface 31a of valve-closing side moving element 31. While valve-opening side moving element 21 and valve-closing side moving element 31 are held at the intermediate position by elastic force of torsion bars 26 and 36, a gap H1 between surface 21a and attraction and contact surface 41a is equal to a gap H2 between surface 31a and attraction and contact surface 41b.

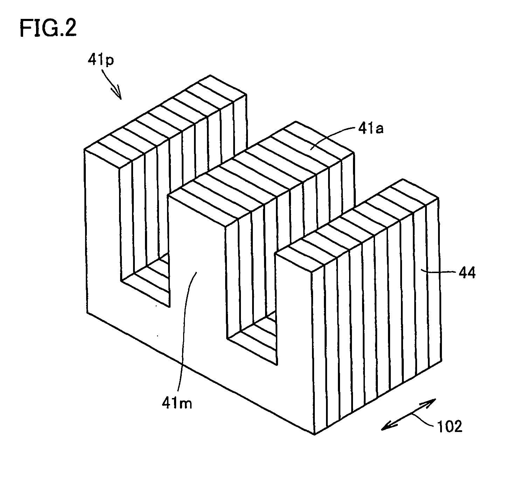

Fig. 2 shows the valve-opening side core portion constituting the electromagnet in Fig. 1. Referring to Fig. 2, valve-opening side core portion 41p is formed from a magnetic material, and in the present embodiment, formed from a plurality of electromagnetic steel sheets 44. A plurality of electromagnetic steel sheets 44 are stacked in a direction (direction shown with an arrow 102) orthogonal to a direction in which valve-opening side moving element 21 extends from support portion 23 toward coupled portion 22. The plurality of stacked electromagnetic steel sheets 44 are fixed to one another through welding, riveting, or the like. Electromagnetic steel sheet 44 has a surface coated with resin, and has a thickness, for example, approximately from 0.2mm to 0.5mm.

Valve-closing side core portion 41q is also formed from electromagnetic steel sheets 44, the number of which is the same as that for valve-opening side core portion 41p. Valve-opening side moving element 21 and valve-closing side moving element 31 may be formed from a magnetic material other than the electromagnetic steel sheet, such as a compact of magnetic powders.

According to such a structure, the electromagnetic force generated by electromagnet 40 and the elastic force of torsion bars 26 and 36 cause valve-opening side moving element 21 and valve-closing side moving element 31 to oscillate around central axes 25 and 35, which in turn causes reciprocating motion of driven valve 14. When valve-opening side moving element 21 is attracted toward attraction and contact surface 41a of electromagnet 40, stem 11 is lowered and driven valve 14 is positioned at the valve-opening position. On the other hand, when valve-closing side moving element 31 is attracted toward attraction and contact surface 41b of electromagnet 40, stem 11 is elevated and driven valve 14 is positioned at the valve-closing position.

An operation at the time of initial drive of electromagnetically driven valve 10 will now described. Before electromagnetically driven valve 10 starts moving, valve-opening side moving element 21 and valve-closing side moving element 31 are held at the intermediate position. Here, the current that flows in a direction shown in Fig. 1 is supplied to coil 42. Then, magnetic circuits are formed between valve-opening side core portion 41p and valve-opening side moving element 21 and between valve-closing side core portion 41q and valve-closing side moving element 31 respectively, and magnetic fluxes flow through valve-opening side moving element 21 and valve-closing side moving element 31 in directions shown with arrows 201 and 202 respectively. Accordingly, the electromagnetic force attracting valve-opening side moving element 21 to attraction and contact surface 41a and the electromagnetic force attracting valve-closing side moving element 31 to attraction and contact surface 41b are simultaneously generated.

Here, as the magnetic flux flows in valve-opening side moving element 21 having relatively large magnetic permeability more easily than in valve-closing side moving element 31 having relatively small magnetic permeability, magnitude of the magnetic flux that flows through valve-opening side moving element 21 is greater than magnitude of the magnetic flux that flows through valve-closing side moving element 31. Therefore, the electromagnetic force applied to valve-opening side moving element 21 is greater than the electromagnetic force applied to valve-closing side moving element 31. Consequently, as a result of current supply to coil 42, valve-opening side moving element 21 and valve-closing side moving element 31 start to oscillate from the intermediate position toward the valve-opening position against the elastic force of torsion bar 36. Thereafter, when excitation is repeated, amplitude of valve-opening side moving element 21 and valve-closing side moving element 31 gradually becomes greater as a result of free oscillation of torsion bars 26 and 36, and valve-opening side moving element 21 and valve-closing side moving element 31 soon start oscillating movement between the valve-opening position and valve-closing position.

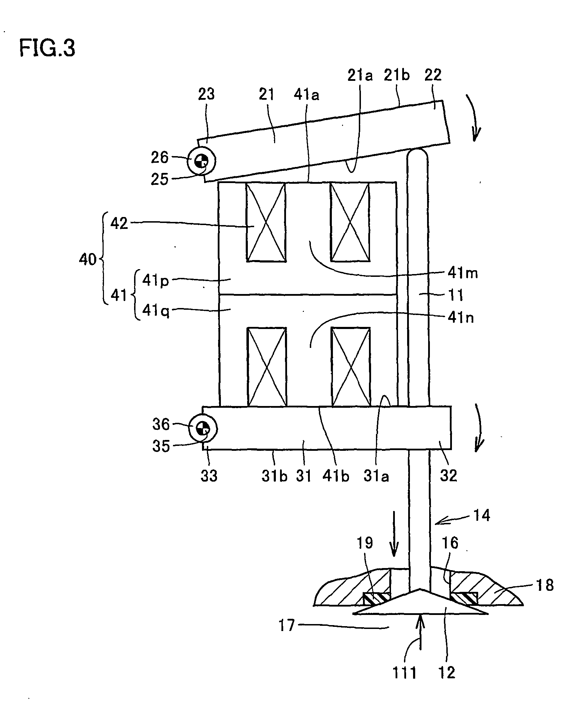

Fig. 3 shows the electromagnetically driven valve in Fig. 1, driven from the valve-closing position to the valve-opening position. Referring to Fig. 3, when driven valve 14 moves from the valve-closing position to the valve-opening position after electromagnetically driven valve 10 starts moving, the in-cylinder pressure is generated in combustion chamber 17 due to the exhaust stroke. The in-cylinder pressure is applied to driven valve 14 in a manner pressing umbrella-shaped portion 12 against valve seat 19 as shown with an arrow 111. Accordingly, attractive force large enough to overcome the in-cylinder pressure should be applied to valve-opening side moving element 21 when the valve opens.

In contrast, in the present embodiment, when driven valve 14 moves from the valve-closing position to the valve-opening position, valve-opening side moving element 21 can be attracted to electromagnet 40 with greater electromagnetic force. Therefore, movement of driven valve 14 can be stable while the current value supplied to coil 42 is suppressed, whereby power consumption can be reduced. Such an effect can be obtained if the direction of oscillation at the time of initial drive is the same as the direction from the valve-closing position to the valve-opening position in an example in which driven valve 14 implements the exhaust valve.

Electromagnetically driven valve 10 according to the first embodiment of the present invention includes: valve-opening side moving element 21 and valve-closing side moving element 31 serving as the first and second moving elements having rotatably supported support portions 23 and 33 and carrying out oscillating movement between the valve-opening position and the valve-closing position around support portions 23 and 33 respectively; and electromagnet 40 having coil 42 implemented by a monocoil and arranged between valve-opening side moving element 21 and valve-closing side moving element 31. Valve-opening side moving element 21 and valve-closing side moving element 31 are held at the position intermediate between the valve-opening position and the valve-closing position while the electromagnetic force is not applied. As a result of current supply to coil 42, the electromagnetic force in a direction toward the valve-opening position and the valve-closing position acts on valve-opening side moving element 21 and valve-closing side moving element 31. Magnetic permeability of the material forming valve-opening moving element 21 is different from magnetic permeability of the material forming valve-closing side moving element 31.

According to electromagnetically driven valve 10 structured as above, the oscillating movement of valve-opening side moving element 21 and valve-closing side moving element 31 can be started simply by supplying a current to coil 42, in spite of coil 42 implemented by a monocoil. Therefore, facilitated initial drive without complicated control can be achieved. In addition, coil 42 implemented by a monocoil is employed, so that the number of expensive parts for the electromagnet can be reduced to half, as compared with an example in which two electromagnets for valve-opening and valve-closing are provided. Moreover, as current supply to coil 42 is merely necessary, the number of circuit elements to be provided in an EDU (electronic driver unit), one circuit element being required for each coil, can also be reduced to half, as in the case of the electromagnet. Therefore, significant cost reduction in manufacturing electromagnetically driven valve 10 can be achieved.

In addition to valve-opening side moving element 21 and valve-closing side moving element 31, valve-opening side core portion 41p may be formed from a magnetic material having relatively large magnetic permeability, while valve-closing side core portion 41q may be formed from a magnetic material having relatively small magnetic permeability. Here, for example, heat treatment for eliminating distortion caused in core portion 41 when it is fixed through welding or riveting (straightening annealing) may not be performed in valve-closing side core portion 41 q.

According to such a structure, greater difference between magnitude of the magnetic flux that flows through valve-opening side moving element 21 and magnitude of the magnetic flux that flows through valve-closing side moving element 31 can be set. Accordingly, at the time of initial drive, valve-opening side moving element 21 and valve-closing side moving element 31 can rapidly and surely be caused to start oscillating between the valve-opening position and the valve-closing position.

### (Second Embodiment)

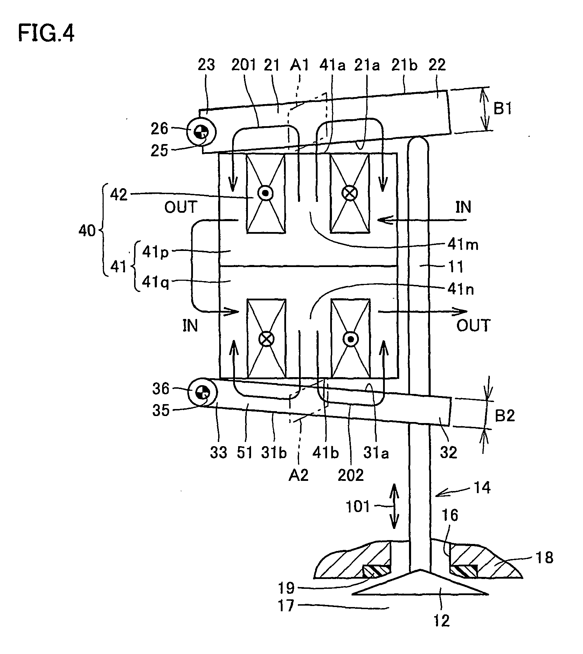

Fig. 4 shows an electromagnetically driven valve according to a second embodiment of the present invention. The electromagnetically driven valve according to the present embodiment is structured basically in a manner similar to electromagnetically driven valve 10 in the first embodiment. Therefore, description of a redundant structure will not be repeated.

Referring to Fig. 4, in the present embodiment, a valve-closing side moving element 51 having magnetic permeability equal to that of valve-opening side moving element 21 is provided, instead of valve-closing side moving element 31 in Fig. 1. Valve-closing side moving element 51 is formed such that a length of valve-closing side moving element 51 in a direction orthogonal to surface 31a, that is, a thickness B2 of valve-closing side moving element 51, is smaller than a length of valve-opening side moving element 21 in a direction orthogonal to surface 21a, that is, a thickness B1 of valve-opening side moving element 21. Here, on the magnetic circuit formed when the current is supplied to coil 42, a minimum cross-sectional area A1 of valve-opening side moving element 21 when it is cut in a plane orthogonal to a direction shown with an arrow 201 is larger than a minimum cross-sectional area A2 of valve-closing side moving element 51 when it is cut in a plane orthogonal to the direction shown with an arrow 202.

Magnetic flux (Φ) is expressed as Φ=B×A, where B represents magnetic flux density and A represents a cross-sectional area of the moving element. Here, magnetic flux saturation is relatively likely in valve-closing side moving element 51 having a smaller cross-sectional area. Accordingly, the magnetic flux that flows through valve-opening side moving element 21 is greater than the magnetic flux that flows through valve-closing side moving element 51, and the electromagnetic force applied to valve-opening side moving element 21 is larger than the electromagnetic force applied to valve-closing side moving element 51. Consequently, as a result of current supply to coil 42, valve-opening side moving element 21 and valve-closing side moving element 31 start to oscillate from the intermediate position toward the valve-opening position against the elastic force of torsion bar 36.

According to the electromagnetically driven valve of the second embodiment of the present invention structured as above, an effect similar to that in the first embodiment can be obtained. In addition, valve-closing side moving element 51 has lighter weight, so that a frequency range in which the electromagnetically driven valve can operate can be expanded. Therefore, the engine speed to which the electromagnetically driven valve can adapt is improved, and engine performance such as output or fuel efficiency can be improved.

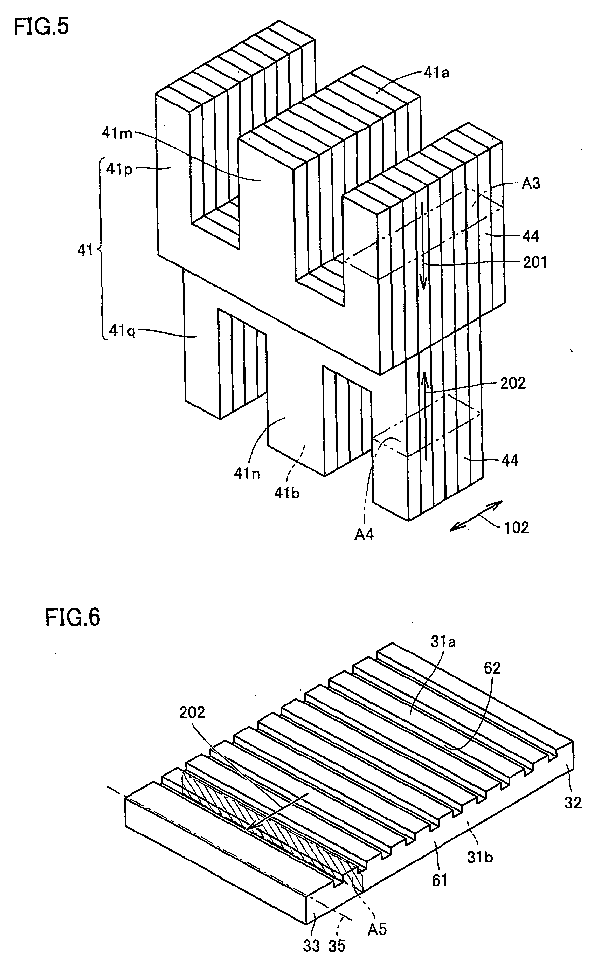

Fig. 5 shows a core portion of an electromagnet employed in a variation of the electromagnetically driven valve in Fig. 4. Referring to Fig. 5, in the present variation, in addition to the structure of the electromagnetically driven valve shown in Fig. 4, core portion 41 is formed in such a manner that the number of stacked electromagnetic steel sheets 44 forming valve-opening side core portion 41p is greater than the number of stacked electromagnetic steel sheets 44 forming valve-closing side core portion 41q. Here, on the magnetic circuit formed when the current is supplied to coil 42, a minimum cross-sectional area A3 of valve-opening side core portion 41p when it is cut in a plane orthogonal to the direction shown with arrow 201 is larger than a minimum cross-sectional area A4 of valve-closing side core portion 41q when it is cut in a plane orthogonal to the direction shown with arrow 202. It is noted that a length of valve-closing side moving element 51 along the direction in which central axis 35 extends, that is, a width of valve-closing side moving element 51, may be made smaller, along with decrease in the area of attraction and contact surface 41b of valve-closing side core portion 41q.

According to such a structure, greater difference between magnitude of the magnetic flux that flows through valve-opening side moving element 21 and magnitude of the magnetic flux that flows through valve-closing side moving element 51 can be set. Accordingly, at the time of initial drive, valve-opening side moving element 21 and valve-closing side moving element 51 can rapidly and surely be caused to start oscillating between the valve-opening position and the valve-closing position. In addition, as the minimum cross-sectional area of the core portion can appropriately be controlled solely by adjusting the number of stacked electromagnetic steel sheets 44, the effect as above can readily be obtained with low cost.

### (Third Embodiment)

Fig. 6 shows a valve-closing side moving element of an electromagnetically driven valve according to a third embodiment of the present invention. The electromagnetically driven valve according to the present embodiment is structured basically in a manner similar to electromagnetically driven valve 10 in the first embodiment. Therefore, description of a redundant structure will not be repeated.

Referring to Fig. 6, in the present embodiment, a valve-closing side moving element 61 having magnetic permeability equal to that of valve-opening side moving element 21 is provided, instead of valve-closing side moving element 31 in Fig. 1. A plurality of grooves 62 are formed in surface 31a of valve-closing side moving element 61. The plurality of grooves 62 extend in the direction in which central axis 35 extends, and they are formed at prescribed intervals from support portion 33 toward coupled portion 32.

According to such a structure, on the magnetic circuit formed when the current is supplied to coil 42, minimum cross-sectional area A1 of valve-opening side moving element 21 when it is cut in a plane orthogonal to the direction shown with arrow 201 is larger than a minimum cross-sectional area A5 of valve-closing side moving element 61 when it is cut in a plane orthogonal to the direction shown with arrow 202. In addition, as an area of surface 31a facing attraction and contact surface 41b of electromagnet 40 and receiving great electromagnetic force is decreased because of presence of grooves 62, force of electromagnet 40 attracting valve-closing side moving element 61 can be made smaller. Consequently, as a result of current supply to coil 42, valve-opening side moving element 21 and valve-closing side moving element 61 start to oscillate from the intermediate position toward the valve-opening position against the elastic force of torsion bar 36.

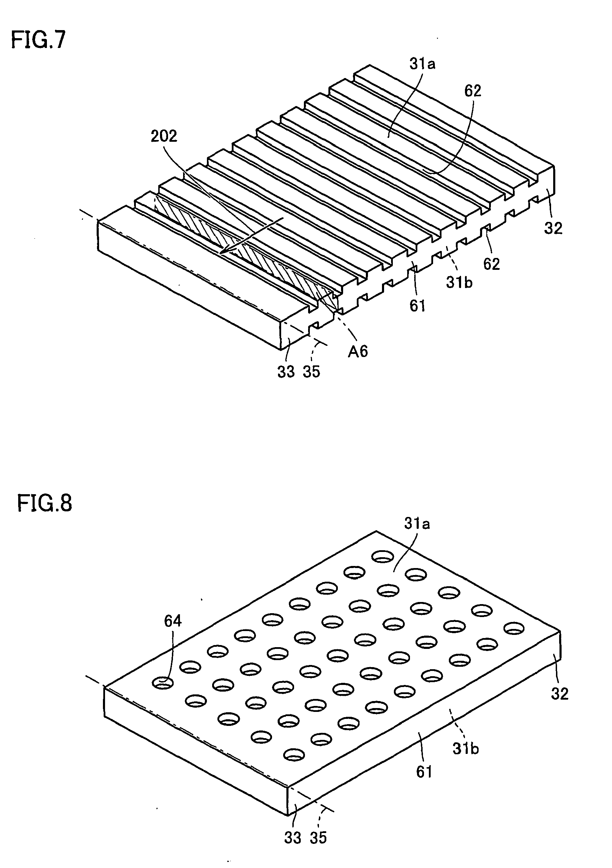

Fig. 7 shows a first variation of the valve-closing side moving element in Fig. 6. Referring to Fig. 7, in the present variation, groove 62 is formed not only in surface 31a but also in surface 31b of valve-closing side moving element 61. According to such a structure, on the magnetic circuit formed when the current is supplied to coil 42, a minimum cross-sectional area A6 of valve-closing side moving element 61 when it is cut in a plane orthogonal to the direction shown with arrow 202 is further smaller than minimum cross-sectional area A5 described above. Groove 62 may be formed solely in surface 31b of valve-closing side moving element 61.

Fig. 8 shows a second variation of the valve-closing side moving element in Fig. 6. Referring to Fig. 8, in the present variation, a plurality of annular holes 64 are formed to a prescribed depth into surface 31a of valve-closing side moving element 61. The plurality of holes 64 are formed and aligned in a direction in which central axis 35 extends and in a direction from support portion 33 toward coupled portion 32. Hole 64 may be formed also in surface 31b, or may be formed solely in surface 31b. Alternatively, hole 64 may be formed in a manner penetrating valve-closing side moving element 61.

According to the electromagnetically driven valve of the third embodiment of the present invention structured as above, an effect similar to that in the first embodiment can be obtained. In addition, in the present embodiment, as compared with the second embodiment in which the thickness of valve-closing side moving element 51 is made smaller, degree of freedom of where to provide groove 62 or hole 64 is higher. Therefore, groove 62 or hole 64 is provided at a position where influence on rigidity is less, so that durability or reliability of valve-closing side moving element 61 can be improved.

### (Fourth Embodiment)

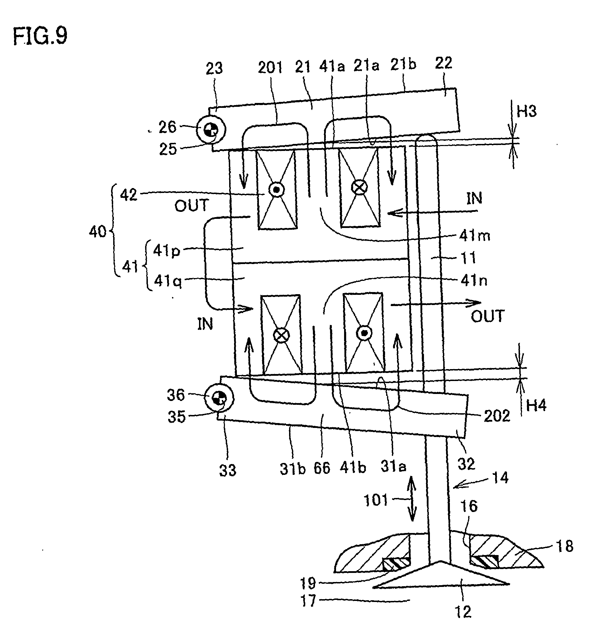

Fig. 9 shows an electromagnetically driven valve according to a fourth embodiment of the present invention. The electromagnetically driven valve according to the present embodiment is structured basically in a manner similar to electromagnetically driven valve 10 in the first embodiment. Therefore, description of a redundant structure will not be repeated.

Referring to Fig. 9, in the present embodiment, a valve-closing side moving element 66 having magnetic permeability equal to that of valve-opening side moving element 21 is provided, instead of valve-closing side moving element 31 in Fig. 1. While the electromagnetic force of electromagnet 40 is not applied, valve-opening side moving element 21 and valve-closing side moving element 66 are positioned at a neutral position in Fig. 9 as a result of elastic force of torsion bars 26 and 36. The neutral position refers to a position closer to the valve-opening position by a prescribed distance in a direction of reciprocating motion of driven valve 14, relative to the position intermediate between the valve-opening position and the valve-closing position.

Here, at the time of initial drive, a gap H3 between surface 2 1 a of valve-opening side moving element 21 and attraction and contact surface 41a of electromagnet 40 is smaller than a gap H4 between surface 31 a of valve-closing side moving element 66 and attraction and contact surface 41b of electromagnet 40. In general, electromagnetic force tends to be inversely proportional to the square of the air gap. Therefore, when current is supplied to coil 42, the electromagnetic force applied to valve-opening side moving element 21 is greater than the electromagnetic force applied to valve-closing side moving element 31. Consequently, as a result of current supply to coil 42, valve-opening side moving element 21 and valve-closing side moving element 66 start to oscillate from the neutral position toward the valve-opening position against the elastic force of torsion bar 36.

In the electromagnetically driven valve according to the fourth embodiment of the present invention, while the electromagnetic force is not applied, valve-opening side moving element 21 and valve-closing side moving element 66 are held at the neutral position between the valve-opening position and the valve-closing position. As a result of current supply to coil 42, the electromagnetic force in the direction to move valve-opening side moving element 21 and valve-closing side moving element 66 toward the valve-opening position and the valve-closing position acts on valve-opening side moving element 21 and valve-closing side moving element 66. The neutral position refers to a position offset from the position intermediate between the valve-opening position and the valve-closing position toward any one of the valve-opening position and the valve-closing position.

According to the electromagnetically driven valve of the fourth embodiment of the present invention structured as above, an effect similar to that in the first embodiment can be obtained. In addition, as valve-opening side moving element 21 and valve-closing side moving element 66 can have the same shape, the number of types of parts can be reduced and the electromagnetically driven valve can be structured with low cost.

In the present embodiment, though the initial position of driven valve 14 is not located at the position intermediate between the valve-opening position and the valve-closing position, this fact itself does not affect engine performance. In some cases, however, a shape of a recess provided on the top surface of the piston of the engine should appropriately be considered.

### (Fifth Embodiment)

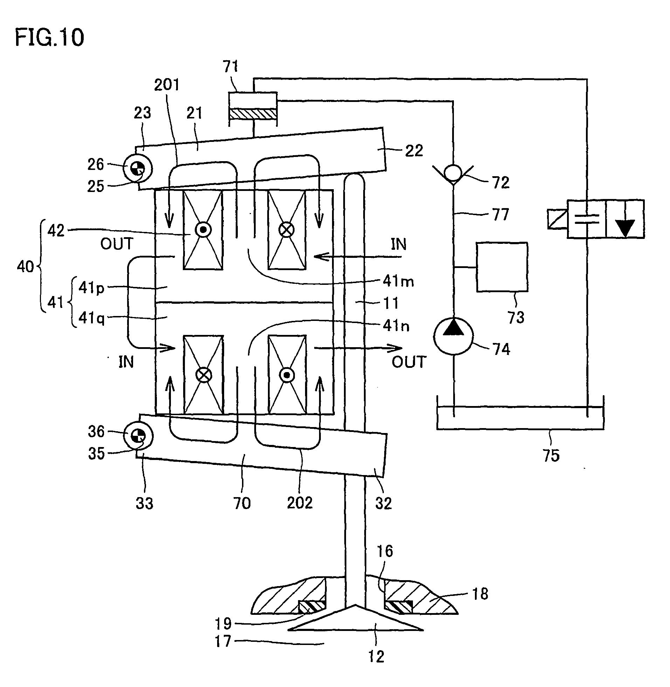

Fig. 10 shows an electromagnetically driven valve according to a fifth embodiment of the present invention. The electromagnetically driven valve according to the present embodiment is structured basically in a manner similar to electromagnetically driven valve 10 in the first embodiment. Therefore, description of a redundant structure will not be repeated.

Referring to Fig. 10, in the present embodiment, a valve-closing side moving element 70 having magnetic permeability equal to that of valve-opening side moving element 21 is provided, instead of valve-closing side moving element 31 in Fig. 1. A hydraulic cylinder 71 is connected to valve-opening side moving element 21. Hydraulic cylinder 71 is connected to an oil pan 75 through an oil supply pipe 77. On the path of oil supply pipe 77, a check valve 72, an accumulator 73 and a hydraulic pump 74 are arranged sequentially from hydraulic cylinder 71. Hydraulic pump 74 is a pump accompanying the engine, and implemented, for example, by an oil pump or a power steering pump. When the engine is operating, accumulator 73 accumulates hydraulic pressure generated in hydraulic pump 74.

At the time of initial drive, hydraulic cylinder 71 is driven by the hydraulic pressure accumulated in accumulator 73, and it moves valve-opening side moving element 21 toward electromagnet 40. The electromagnetic force in a direction toward the valve-opening position applied to valve-opening side moving element 21 is thus assisted. Consequently, valve-opening side moving element 21 and valve-closing side moving element 70 start to oscillate from the intermediate position toward the valve-opening position against the elastic force of torsion bar 36.

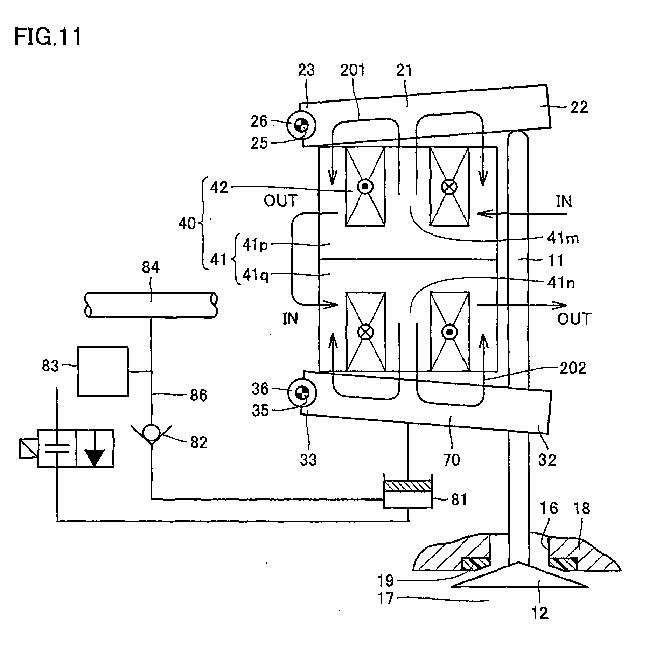

Fig. 11 shows a variation of the electromagnetically driven valve in Fig. 10. Referring to Fig. 11, in the present variation, an air cylinder 81 is connected to valve-closing side moving element 70. Air cylinder 81 is connected to an intake port 84 of the engine through an air supply pipe 86. On the path of air supply pipe 86, a check valve 82 and a surge tank 83 are arranged sequentially from air cylinder 81. When the engine is operating, surge tank 83 accumulates negative pressure generated in intake port 84.

At the time of initial drive, the negative pressure accumulated in surge tank 83 drives air cylinder 81, and it moves valve-closing side moving element 70 toward electromagnet 40. Force in a direction opposite to the direction of electromagnetic force toward the valve-closing position is applied to valve-closing side moving element 70. Consequently, valve-opening side moving element 21 and valve-closing side moving element 70 start to oscillate from the intermediate position toward the valve-opening position against the elastic force of torsion bar 36.

According to the electromagnetically driven valve of the fifth embodiment of the present invention structured as above, an effect similar to that in the first embodiment can be obtained. In addition, by utilizing the hydraulic pressure or the negative pressure generated in the engine, it is not necessary to provide a new power source, and the electromagnetically driven valve can have a simplified structure. Moreover, as power consumption in electromagnet 40 can be reduced and heat generation is also small, cooling of electromagnet 40 may not be necessary.

Hydraulic pump 74 in Fig. 10 may be provided separately from the pump accompanying the engine, for initial drive of the electromagnetically driven valve. Air supply pipe 86 in Fig. 11 may be connected to a negative pressure pump provided for initial drive of the electromagnetically driven valve, instead of intake port 84. The direction in which the moving element is moved by hydraulic cylinder 71 or by air cylinder 81 may ultimately be a direction in which valve-opening side moving element 21 and valve-closing side moving element 70 are caused to oscillate from the intermediate position to the valve-closing position.

The electromagnetically driven valve according to the present embodiment may be a rotary drive type electromagnetically driven valve including a moving element and an electromagnet having a valve-closing core portion and a valve-opening core portion arranged above and below the moving elements respectively and formed by winding a monocoil around the core portions.

The structure of the electromagnetically driven valves described in the first to fifth embodiments may be combined as appropriate to configure a new electromagnetically driven valve.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims. Industrial Applicability

The present invention mainly relates to an electromagnetically driven valve incorporated in an internal combustion engine such as a gasoline engine, a diesel engine, or the like.

## Claims

1. An electromagnetically driven valve, comprising:
first and second moving elements (21, 31) having rotatably supported support portions (23, 33) and carrying out oscillating movement between a valve-opening position and a valve-closing position around said support portions (23, 33) respectively; and
an electromagnet (40) having a monocoil (42) and arranged between said first moving element (21) and said second moving element (31); wherein
said first and second moving elements (21, 31) are held at a position intermediate between said valve-opening position and said valve-closing position while electromagnetic force is not applied, and as a result of current supply to said monocoil (42), the electromagnetic force in a direction toward said valve-opening position and said valve-closing position acts on said first and second moving elements (21, 31), and
magnetic permeability of a material forming said first moving element (21) is different from magnetic permeability of a material forming said second moving element (31).

2. The electromagnetically driven valve according to claim 1, wherein
said electromagnet (40) further includes first and second core portions (41p, 41 q) around which said monocoil (42) is wound, such that magnetic fluxes pass between said first and second core portions (41p, 41q) and said first and second moving elements (21, 31) respectively,
when the magnetic permeability of the material forming said first moving element (21) is greater than the magnetic permeability of the material forming said second moving element (31), magnetic permeability of a material forming said first core portion (41p) is greater than magnetic permeability of a material forming said second core portion (41 q), and
when the magnetic permeability of the material forming said first moving element (21) is smaller than the magnetic permeability of the material forming said second moving element (31), magnetic permeability of the material forming said first core portion (41p) is smaller than magnetic permeability of the material forming said second core portion (41q).

3. The electromagnetically driven valve according to claim 1, mounted on an internal combustion engine and used to control communication between a combustion chamber (17) and an exhaust port (16), further comprising a driven valve (14) coupled to said first and second moving elements (21, 31) and moving from a position where it cuts off communication between the combustion chamber (17) and the exhaust port (16) into the combustion chamber (17) along with movement of said first and second moving elements (21, 31) from the valve-closing position to the valve-opening position; wherein
the magnetic permeability of the material forming said first moving element (21) is greater than the magnetic permeability of the material forming said second moving element (31).

4. An electromagnetically driven valve, comprising:
first and second moving elements (21, 31) having rotatably supported support portions (23, 33) and carrying out oscillating movement between a valve-opening position and a valve-closing position around said support portions (23, 33) respectively; and
an electromagnet (40) having a monocoil (42) and arranged between said first moving element (21) and said second moving element (31); wherein
said first and second moving elements (21, 31) are held at a position intermediate between said valve-opening position and said valve-closing position while electromagnetic force is not applied, and as a result of current supply to said monocoil (42), magnetic flux flows through said first and second moving elements (21, 31) and the electromagnetic force in a direction toward said valve-opening position and said valve-closing position acts on said first and second moving elements (21, 31), and
said first moving element (21) is different in shape from said second moving element (31), on a magnetic circuit through which said magnetic flux passes.

5. The electromagnetically driven valve according to claim 4, wherein
when said first and second moving elements (21, 31) are cut in a plane orthogonal to a direction in which said magnetic flux flows, a minimum cross-sectional area of said first moving element (21) on the magnetic circuit through which said magnetic flux flows is different from a minimum cross-sectional area of said second moving element (31) on the magnetic circuit through which said magnetic flux flows.

6. The electromagnetically driven valve according to claim 5, wherein
said first and second moving elements (21, 31) further have first and second surfaces (21a, 31a) each extending on a single surface, facing respective opposing surfaces of said electromagnet (40) and receiving the electromagnetic force, respectively, and
an area of said first surface (21a) is different from an area of said second surface (31a).

7. The electromagnetically driven valve according to claim 6, wherein
said electromagnet (40) further has first and second attraction and contact surfaces (41a, 41b) each extending on a single surface, facing said first and second surfaces (21a, 31a) and attracting said first and second moving elements (21, 31) respectively, and
when the area of said first surface (21a) is greater than the area of said second surface (31a), an area of said first attraction and contact surface (41a) is greater than an area of said second attraction and contact surface (41b), and when the area of said first surface (21a) is smaller than the area of said second surface (31a), the area of said first attraction and contact surface (41a) is smaller than the area of said second attraction and contact surface (41b).

8. The electromagnetically driven valve according to claim 4, mounted on an internal combustion engine and used to control communication between a combustion chamber (17) and an exhaust port (16), further comprising a driven valve (14) coupled to said first and second moving elements (21, 31) and moving from a position where it cuts off communication between the combustion chamber (17) and the exhaust port (16) into the combustion chamber (17) along with movement of said first and second moving elements (21, 31) from the valve-closing position to the valve-opening position; wherein
when said first and second moving elements (21, 31) are cut in a plane orthogonal to a direction in which said magnetic flux flows, a minimum cross-sectional area of said first moving element (21) on the magnetic circuit through which said magnetic flux flows is greater than a minimum cross-sectional area of said second moving element (31) on the magnetic circuit through which said magnetic flux flows.

9. An electromagnetically driven valve, comprising:
a moving element (21, 31) having a rotatably supported support portion (23, 33) and carrying out oscillating movement between a valve-opening position and a valve-closing position around said support portion (23, 33);
an electromagnet (40) having a monocoil (42) and applying electromagnetic force to said moving element (21, 31), said moving element (21, 31) being held at a position intermediate between said valve-opening position and said valve-closing position while said electromagnetic force is not applied, and as a result of current supply to said monocoil (42), the electromagnetic force in a direction toward said valve-opening position and said valve-closing position acting on said moving element (21, 31); and
an actuator (71) applying force in a direction to move said moving element (21, 31) to any one of said valve-opening position and said valve-closing position to said moving element (21, 31) held at said intermediate position.

10. The electromagnetically driven valve according to claim 9, mounted on an internal combustion engine, wherein
said actuator (71) is driven by power generated when said internal combustion engine is driven.

## Patentansprüche

1. Elektromagnetisch angetriebenes Ventil, aufweisend:
erste und zweite Bewegungselemente (21, 31), die drehbar gelagerte Tragbereiche (23, 33) aufweisen und zwischen einer Ventilöffnungsposition und einer Ventilschließposition um die jeweiligen Tragbereiche (23, 33) eine Schwenkbewegung ausführen; und
ein Elektromagnet (40), der eine Monospule (42) aufweist und zwischen dem ersten Bewegungselement (21) und dem zweiten Bewegungselement (31) angeordnet ist; wobei
das erste und zweite Bewegungselement (21, 31) an einer Zwischenposition zwischen der Ventilöffnungsposition und der Ventilschließposition gehalten werden, während keine elektromagnetische Kraft ausgeübt wird, und infolge einer Stromzufuhr zur Monospule (42), die elektromagnetische Kraft in einer Richtung zur Ventilöffnungsposition und zur Ventilschließposition auf das erste und das zweite Bewegungselement (21, 31) einwirkt, und
eine magnetische Durchlässigkeit eines Materials, das das erste Bewegungselement (21) ausbildet, sich von einer magnetischen Durchlässigkeit eines Materials unterscheidet, das das zweite Bewegungselement (31) ausbildet.

2. Elektromagnetisch angetriebenes Ventil nach Anspruch 1, wobei
der Elektromagnet (40) ferner einen ersten und einen zweiten Kernbereich (41p, 41q) beinhaltet, um die die Monospule (42) gewickelt ist, so dass Magnetflüsse zwischen dem ersten und dem zweiten Kernbereich (41p, 41q) und jeweils dem ersten und dem zweiten Bewegungselement (21, 31) hindurchgelangen,
wenn die magnetische Durchlässigkeit des Materials, das das erste Bewegungselement (21) ausbildet, größer ist als die magnetische Durchlässigkeit des Materials, dass das zweite Bewegungselement (31) ausbildet, eine magnetische Durchlässigkeit eines Materials, das den ersten Kernbereich (41p) ausbildet, größer ist als eine magnetische Durchlässigkeit eines Materials, das den zweiten Kernbereich (41q) ausbildet, und
wenn die magnetische Durchlässigkeit des Materials, das das erste Bewegungselement (21) ausbildet, geringer ist als die magnetische Durchlässigkeit des Materials, das das zweite Bewegungselement (31) ausbildet, die magnetische Durchlässigkeit des Materials, das den ersten Kernbereich (41p) ausbildet, geringer ist als die magnetische Durchlässigkeit des Materials, das den zweiten Kernbereich (41q) ausbildet.

3. Elektromagnetisch angetriebenes Ventil nach Anspruch 1, das an einem Verbrennungsmotor befestigt ist und verwendet wird, um eine Verbindung zwischen einem Verbrennungsraum (17) und einem Abgaskanal (16) zu steuern, das ferner ein angetriebenes Ventil (14) aufweist, das mit dem ersten und dem zweiten Bewegungselement (21, 31) verbunden ist und sich von einer Position, wo es eine Verbindung zwischen dem Verbrennungsraum (17) und dem Abgaskanal (16) unterbricht, zusammen mit einer Bewegung des ersten und des zweiten Bewegungselements (21, 31) von der Ventilschließposition zur Ventilöffnungsposition in den Verbrennungsraum (17) bewegt; wobei
die magnetische Durchlässigkeit des Materials, das das erste Bewegungselement (21) ausbildet, größer ist als die magnetische Durchlässigkeit des Materials, das das zweite Bewegungselement (31) ausbildet.

4. Elektromagnetisch angetriebenes Ventil, aufweisend:
ein erstes und ein zweites Bewegungselement (21, 31), die drehbar gelagerte Tragbereiche (23, 33) aufweisen und eine Schwenkbewegung zwischen einer Ventilöffnungsposition und einer Ventilschließposition jeweils um die Tragbereiche (23, 33) ausführen; und
einen Elektromagneten (40), der eine Monospule (42) aufweist und zwischen dem ersten Bewegungselement (21) und dem zweiten Bewegungselement (31) angeordnet ist; wobei
das erste und das zweite Bewegungselement (21, 31) an einer Zwischenposition zwischen der Ventilöffnungsposition und der Ventilschließposition gehalten werden, während keine elektromagnetische Kraft ausgeübt wird, und infolge der Stromzufuhr zur Monospule (42), ein Magnetfluss durch das erste und das zweite Bewegungselement (21, 31) fließt und die elektromagnetische Kraft in einer Richtung zur Ventilöffnungsposition und zur Ventilschließungsposition auf das erste und das zweite Bewegungselement (21, 31) einwirkt, und
auf einem Magnetschaltkreis, durch den ein Magnetfluss gelangt, das erste Bewegungselement (21) sich in seiner Form von dem zweiten Bewegungselement (31) unterscheidet.

5. Elektromagnetisch angetriebenes Ventil nach Anspruch 4, wobei
wenn das erste und das zweite Bewegungselement (21, 31) in einer Ebene orthogonal zu einer Richtung, in der der Magnetfluss fließt, durchgeschnitten sind, sich eine minimale Querschnittsfläche des ersten Bewegungselements (21) auf dem Magnetschaltkreis, durch den der Magnetfluss fließt, von einer minimalen Querschnittsfläche des zweiten Bewegungselements (31) auf dem Magnetschaltkreis, durch den der Magnetfluss fließt, unterscheidet.

6. Elektromagnetisch angetriebenes Ventil nach Anspruch 5, wobei
das erste und das zweite Bewegungselement (21, 31) ferner eine erste und eine zweite Oberfläche (21a, 31a) aufweisen, die sich jeweils auf einer einzigen Oberfläche erstrecken, wobei sie zu den jeweils entgegengesetzten Oberflächen des Elektromagnets (40) gerichtet sind und jeweils die elektromagnetische Kraft aufnehmen, und
ein Bereich der ersten Oberfläche (21) sich von einem Bereich der zweiten Oberfläche (31a) unterscheidet.

7. Elektromagentisch angetriebenes Ventil nach Anspruch 6, wobei
der Elektromagnet (40) ferner eine erste und eine zweite Anziehungs- und Kontaktoberfläche (41a, 41b) aufweist, die sich jeweils auf einer einzigen Oberfläche erstrecken, wobei sie jeweils zu der ersten und der zweiten Oberfläche (21a, 31a) gerichtet sind und das erste und das zweite Bewegungselement (21, 31) anziehen, und
wenn der Bereich der ersten Oberfläche (21a) größer ist als der Bereich der zweiten Oberfläche (31a), ein Bereich dieser ersten Anziehungs- und Kontaktoberfläche (41a) größer ist als ein Bereich der zweiten Anziehungs- und Kontaktoberfläche (41b), und wenn der Bereich der ersten Oberfläche (21a) kleiner ist als der Bereich der zweiten Oberfläche (31a), der Bereich der ersten Anziehungs- und Kontaktoberfläche (41a) kleiner ist als der Bereich der zweiten Anziehungs- und Kontaktoberfläche (41b).

8. Elektromagnetisch angetriebenes Ventil nach Anspruch 4, das an einem Verbrennungsmotor befestigt ist und verwendet wird, um eine Verbindung zwischen einem Verbrennungsraum (17) und einem Abgaskanal (16) zu steuern, das ferner ein angetriebenes Ventil (14) aufweist, das mit dem ersten und dem zweiten Bewegungselement (21, 31) verbunden ist und sich von einer Position, wo es eine Verbindung zwischen dem Verbrennungsraum (17) und dem Abgaskanal (16) unterbricht, zusammen mit einer Bewegung des ersten und des zweiten Bewegungselements (21, 31) von der Ventilschließposition zur Ventilöffnungsposition in den Verbrennungsraum (17) bewegt; wobei
wenn das erste und das zweite Bewegungselement (21, 31) in einer Ebene orthogonal zu einer Richtung, in der der Magnetfluss fließt, durchgeschnitten sind, eine minimale Querschnittsfläche des ersten Bewegungselements (21) auf dem Magnetschaltkreis, durch den der Magnetfluss fließt, größer ist als eine minimale Querschnittsfläche des zweiten Bewegungselements (31) auf dem Magnetschaltkreis, durch den der Magnetfluss fließt.

9. Elektromagnetisch angetriebenes Ventil, aufweisend:
ein Bewegungselement (21, 31), das einen drehbar gelagerten Tragbereich (23, 33) aufweist und eine Schwenkbewegung zwischen einer Ventilöffnungsposition und einer Ventilschließposition um den Tragbereich (23, 33) ausführt; und
einen Elektromagnet (40), der eine Monospule (42) aufweist und eine elektromagnetische Kraft auf das Bewegungselement (21, 31) ausübt, wobei das Bewegungselement (21, 31) an einer Zwischenposition zwischen der Ventilöffnungsposition und der Ventilschließposition gehalten wird, während keine elektromagnetische Kraft ausgeübt wird, und infolge einer Stromzufuhr zur Monospule (42), die elektromagnetische Kraft in einer Richtung zur Ventilöffnungsposition und zur Ventilschließposition auf das Bewegungselement (21, 31) einwirkt, und
ein Stellglied (71) zum Ausüben einer Kraft in einer Richtung, um das Bewegungselement (21, 31) in entweder die Ventilöffnungsposition oder die Ventilschließposition zu bewegen, wo das Bewegungselement (21, 31) in einer Zwischenposition gehalten wird.

10. Elektromagnetisch angetriebenes Ventil nach Anspruch 9, das an einem Verbrennungsmotor befestigt ist, wobei
das Stellglied (71) durch eine Leistung angetrieben wird, die erzeugt wird, wenn der Verbrennungsmotor angetrieben wird.

## Revendications

1. Soupape à commande électromagnétique, comprenant :
un premier et un deuxième éléments mobiles (21, 31) ayant des parties de support (23, 33) soutenues en rotation et effectuant un mouvement d'oscillation entre une position d'ouverture de soupape et une position de fermeture de soupape autour desdites parties de support (23, 33) respectivement ; et
un électroaimant (40) ayant une monobobine (42) et agencé entre ledit premier élément mobile (21) et ledit deuxième élément mobile (31) ; dans lequel
lesdits premier et deuxième éléments mobiles (21, 31) sont maintenus à une position intermédiaire entre ladite position d'ouverture de soupape et ladite position de fermeture de soupape tandis que la force électromagnétique n'est pas appliquée, et par suite de l'alimentation de courant à ladite monobobine (42), la force électromagnétique dans une direction vers ladite position d'ouverture de soupape et ladite position de fermeture de soupape agit sur lesdits premier et deuxième éléments mobiles (21, 31), et
la perméabilité magnétique d'un matériau formant ledit premier élément mobile (21) est différente de la perméabilité magnétique d'un matériau formant ledit deuxième élément mobile (31).

2. Soupape à commande électromagnétique selon la revendication 1, dans laquelle
ledit électroaimant (40) inclut en plus une première et une deuxième parties centrales (41p, 41q) autour desquelles ladite monobobine (42) est enroulée, de telle sorte que des flux magnétiques passent entre lesdites première et deuxième parties centrales (41p, 41q) et lesdits premier et deuxième éléments mobiles (21, 31) respectivement,
lorsque la perméabilité magnétique du matériau formant ledit premier élément mobile (21) est supérieure à la perméabilité magnétique du matériau formant ledit deuxième élément mobile (31), la perméabilité magnétique d'un matériau formant ladite première partie centrale (41p) est supérieure à la perméabilité magnétique d'un matériau formant ladite deuxième partie centrale (41q), et
lorsque la perméabilité magnétique du matériau formant ledit premier élément mobile (21) est inférieure à la perméabilité magnétique du matériau formant ledit deuxième élément mobile (31), la perméabilité magnétique du matériau formant ladite première partie centrale (41p) est inférieure à la perméabilité magnétique du matériau formant ladite deuxième partie centrale (41q).

3. Soupape à commande électromagnétique selon la revendication 1, montée sur un moteur à combustion interne et utilisée pour commander l'échange entre une chambre de combustion (17) et un orifice de refoulement (16), comprenant en plus une soupape commandée (14) couplée auxdits premier et deuxième éléments mobiles (21, 31) et se déplaçant d'une position où elle coupe la communication entre la chambre de combustion (17) et l'orifice de refoulement (16) dans la chambre de combustion (17) avec le mouvement desdits premier et deuxième éléments mobiles (21, 31) de la position de fermeture de soupape à la position d'ouverture de soupape, où
la perméabilité magnétique du matériau formant ledit premier élément mobile (21) est supérieure à la perméabilité magnétique du matériau formant ledit deuxième élément mobile (31).

4. Soupape à commande électromagnétique, comprenant :
un premier et un deuxième éléments mobiles (21, 31) ayant des parties de support (23, 33) soutenues en rotation et effectuant un mouvement d'oscillation entre une position d'ouverture de soupape et une position de fermeture de soupape autour desdites parties de support (23, 33) respectivement ; et
un électroaimant (40) ayant une monobobine (42) et agencé entre ledit premier élément mobile (21) et ledit deuxième élément mobile (31) ; dans lequel
lesdits premier et deuxième éléments mobiles (21, 31) sont maintenus à une position intermédiaire entre ladite position d'ouverture de soupape et ladite position de fermeture de soupape tandis que la force électromagnétique n'est pas appliquée, et par suite de l'alimentation de courant à ladite monobobine (42), un flux magnétique circule à travers lesdits premier et deuxième éléments mobiles (21, 31) et la force électromagnétique dans une direction vers ladite position d'ouverture de soupape et ladite position de fermeture de soupape agit sur lesdits premier et deuxième éléments mobiles (21, 31), et
ledit premier élément mobile (21) a une forme différente dudit deuxième élément mobile (31), sur un circuit magnétique à travers lequel ledit flux magnétique passe.

5. Soupape à commande électromagnétique selon la revendication 4, dans laquelle
lorsque lesdits premier et deuxième éléments mobiles (21, 31) sont coupés dans un plan orthogonal à une direction dans laquelle ledit flux magnétique circule, une aire en coupe transversale minimale dudit premier élément mobile (21) sur le circuit magnétique à travers lequel ledit flux magnétique circule est différente d'une aire en coupe transversale minimale dudit deuxième élément mobile (31) sur le circuit magnétique à travers lequel ledit flux magnétique circule.

6. Soupape à commande électromagnétique selon la revendication 5, dans laquelle
lesdits premier et deuxième éléments mobiles (21, 31) ont en plus une première et une deuxième surfaces (21a, 31a) s'étendant chacune sur une seule surface, regardant des surfaces opposées respectives dudit électroaimant (40) et recevant la force électromagnétique, respectivement, et
une aire de ladite première surface (21a) est différente d'une aire de ladite deuxième surface (31a).

7. Soupape à commande électromagnétique selon la revendication 6, dans laquelle
ledit électroaimant (40) a en plus une première et une deuxième surfaces d'attraction et de contact (41a, 41b) s'étendant chacune sur une seule surface, regardant lesdites première et deuxième surfaces (21a, 31a) et attirant lesdits premier et deuxième éléments mobiles (21, 31) respectivement, et
lorsque l'aire de ladite première surface (21a) est supérieure à l'aire de ladite deuxième surface (31a), une aire de ladite première surface d'attraction et de contact (41a) est supérieure à une aire de ladite deuxième surface d'attraction et de contact (41b), et lorsque l'aire de ladite première surface (21a) est inférieure à l'aire de ladite deuxième surface (31a), l'aire de ladite première surface d'attraction et de contact (41a) est inférieure à l'aire de ladite deuxième surface d'attraction et de contact (41b).

8. Soupape à commande électromagnétique selon la revendication 4, montée sur un moteur à combustion interne et utilisée pour commander l'échange entre une chambre de combustion (17) et un orifice de refoulement (16), comprenant en plus une soupape commandée (14) couplée auxdits premier et deuxième éléments mobiles (21, 31) et se déplaçant d'une position où elle coupe la communication entre la chambre de combustion (17) et l'orifice de refoulement (16) dans la chambre de combustion (17) avec le mouvement desdits premier et deuxième éléments mobiles (21, 31) de la position de fermeture de soupape à la position d'ouverture de soupape, où
lorsque lesdits premier et deuxième éléments mobiles (21, 31) sont coupés dans un plan orthogonal à une direction dans laquelle ledit flux magnétique circule, une aire en coupe transversale minimale dudit premier élément mobile (21) sur le circuit magnétique à travers lequel ledit flux magnétique circule est supérieure à une aire en coupe transversale minimale dudit deuxième élément mobile (31) sur le circuit magnétique à travers lequel ledit flux magnétique circule.

9. Soupape à commande électromagnétique, comprenant :
un élément mobile (21, 31) ayant des parties de support (23, 33) soutenues en rotation et effectuant un mouvement d'oscillation entre une position d'ouverture de soupape et une position de fermeture de soupape autour desdites parties de support (23, 33);
un électroaimant (40) ayant une monobobine (42) et appliquant une force électromagnétique audit élément mobile (21, 31), ledit élément mobile (21, 31) étant maintenu à une position intermédiaire entre ladite position d'ouverture de soupape et ladite position de fermeture de soupape tandis que ladite force électromagnétique n'est pas appliquée, et par suite de l'alimentation de courant à ladite monobobine (42), la force électromagnétique dans une direction vers ladite position d'ouverture de soupape et ladite position de fermeture de soupape agit sur ledit élément mobile (21, 31) ; et
un actionneur (71) appliquant une force dans une direction pour déplacer ledit élément mobile (21, 31) vers l'une quelconque de ladite position d'ouverture de soupape et de ladite position de fermeture de soupape audit élément mobile (21, 31) maintenu à ladite position intermédiaire.

10. Soupape à commande électromagnétique selon la revendication 9, montée sur un moteur à combustion interne, dans laquelle
ledit actionneur (71) est commandé par une puissance électrique générée lorsque ledit moteur à combustion interne est entraîné.
